(19) Europäisches Patentamt European Patent Office Office européen des brevets

(11) **EP 3 180 405 B1**

(12) **EUROPÄISCHE PATENTSCHRIFT**

(45) Veröffentlichungstag und Bekanntmachung des Hinweises auf die Patenterteilung:
26.12.2018 Patentblatt 2018/52

(21) Anmeldenummer: **15753335.7**

(22) Anmeldetag: **11.08.2015**

(51) Int Cl.:
*C09J 7/29* (2018.01)  *H02G 3/04* (2006.01)
*B32B 3/08* (2006.01)  *B32B 5/02* (2006.01)
*B32B 7/12* (2006.01)  *B32B 27/12* (2006.01)
*B32B 27/30* (2006.01)

(86) Internationale Anmeldenummer:
**PCT/EP2015/068499**

(87) Internationale Veröffentlichungsnummer:
**WO 2016/023921 (18.02.2016 Gazette 2016/07)**

(54) **VERFAHREN ZUR HERSTELLUNG EINER UMMANTELUNG FÜR LANGGESTRECKTES GUT**

METHOD FOR THE PRODUCTION OF A CLADDING FOR ELONGATED MATERIAL

UN PROCÉDÉ DE FABRICATION D'UNE GAINE POUR PRODUIT ALLONGÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2014 DE 102014111494**

(43) Veröffentlichungstag der Anmeldung:
**21.06.2017 Patentblatt 2017/25**

(73) Patentinhaber: **certoplast Technische Klebebänder GmbH**
**42285 Wuppertal (DE)**

(72) Erfinder:
• **LEERMANN, Timo**
**42285 Wuppertal (DE)**
• **RAMBUSCH, Peter**
**42115 Wuppertal (DE)**
• **RUHNAU, Kay**
**42285 Wuppertal (DE)**
• **HOHMANN, Andreas Franz**
**42285 Wuppertal (DE)**

(74) Vertreter: **Nunnenkamp, Jörg**
**Andrejewski - Honke**
**Patent- und Rechtsanwälte**
**An der Reichsbank 8**
**45127 Essen (DE)**

(56) Entgegenhaltungen:
EP-A1- 1 312 097   EP-A1- 1 875 573
EP-A2- 1 300 452   DE-A1-102011 079 114

## Beschreibung

Die Erfindung betrifft eine Verfahren zur Herstellung einer Ummantelung für langgestrecktes Gut, insbesondere einer Umhüllung für Kabelsätze, wonach zwei jeweils zumindest einseitig mit einer Klebebeschichtung ausgerüstete Klebebänder axial voneinander beabstandet mithilfe eines Trägerbandes zu einem Laminat vereinigt werden und dazu die beiden Klebebänder in Längserstreckung unter Definition eines von ihnen begrenzten Freibereiches jeweils klebebeschichtungsseitig mit dem Trägerband vereinigt werden, und wonach das Trägerband klebebeschichtungsfrei ausgebildet ist.

Bei einem Verfahren der eingangs beschriebenen Ausgestaltung, wie es im Rahmen der DE 10 2011 079 114 A1 beschrieben ist, geht es um ein Klebeband bzw. eine Eindeckung, welche nach dem Ausführungsbeispiel in der Fig. 3 auf seiner Oberseite jeweils im Kantenbereich zwei Klebebänder aufweist. Tatsächlich sind im fraglichen Kantenbereich die beiden Klebebänder derart aufgebracht, dass die Klebebänder die Kante der Eindeckung überlappen. Bei der Eindeckung handelt es sich bevorzugt um eine solche, die nicht mit Klebemasse ausgerüstet ist und aus einem gefärbten textilen Träger hergestellt wird.

Bei einem anderen Verfahren, wie es in der US 4 327 246 beschrieben wird, wird so vorgegangen, dass zwei Klebebänder mit einem gemeinsamen Träger ausgerüstet sind. Die beiden Klebebänder sind in Laufrichtung jeweils klebemassenseitig mit Versatz aufeinander laminiert. Zur Bündelung des langgestreckten Gutes wird das betreffende Klebeband parallel hierzu ausgerichtet und dann um das langgestreckte Gut herumgewickelt. Als Alternative zu dieser Längswicklung wird im Rahmen der an dieser Stelle einschlägigen US 4 327 246 auch beschrieben, dass das Klebeband in einer spiralförmigen oder schraubenförmigen Bewegung um das langgestreckte Gut geführt werden kann.

Eine vergleichbare Vorgehensweise wird im Rahmen der EP 1 875 573 B1 beschrieben. Dabei kommen insgesamt drei Klebebänder zum Einsatz. Zunächst einmal werden ein erstes und ein zweites einseitig klebend ausgerüstetes Klebeband in Laufrichtung jeweils klebemassenseitig mit Versatz aufeinander laminiert. An der freien Kante des ersten Klebebandes der Umhüllung ist dann noch ein drittes einseitig klebend ausgerüstetes Klebeband auf das erste Klebeband in Laufrichtung wiederum klebemassenseitig mit Versatz auflaminiert. Das dritte Klebeband ist hierbei auf der gleichen Seite des ersten Klebebandes angeordnet wie das zweite Klebeband.

Auf diese Weise will man eine Möglichkeit zur Bandagierung von Einzelleitungen zu Kabelsätzen mit hohem Schutz gegen mechanische Beschädigungen durch Scheuern und Reiben an scharfen Kanten, Graten und Schweißpunkten zur Verfügung stellen. Allerdings ist die Herstellung aufwendig, weil insgesamt drei einseitig klebend ausgerüstete Klebebänder in bestimmter Verfahrensabfolge mit Versatz aufeinander laminiert werden. Hierbei kommt es zu einem Kontakt der jeweiligen Klebemassen, so dass etwaige Korrekturen nicht (mehr) möglich sind. Außerdem ist die Handhabung einseitig klebend ausgerüsteter Klebebänder aufwendig und muss ggf. mit Schutzfilmen gearbeitet werden.

Die EP 1 312 097 B1 befasst sich mit einer Ummantelung zum Ummanteln von langgestrecktem Gut. Diese weist eine textile Eindeckung auf, bei der in einem schmalen Kantenbereich ein selbstklebend ausgerüstetes Klebeband vorhanden ist. Außerdem findet sich ein weiteres zweites selbstklebend ausgerüstetes Klebeband. Beide Klebebänder erstrecken sich über die zugehörigen Längskanten der Eindeckung. Insgesamt wird das Ziel verfolgt, eine einfache, preiswerte und schnelle Ummantelung zu ermöglichen. Zu diesem Zweck ist die Eindeckung selbst klebemassenfrei ausgelegt, kann folglich nicht zur Verklebung beitragen.

Bei der EP 1 300 452 A2 geht es um eine Ummantelung für insbesondere Kabelsätze. Eine an dieser Stelle vorgesehene textile Eindeckung ist zu diesem Zweck mit einem selbstklebend ausgerüsteten Klebeband ausgerüstet, welches so auf der Eindeckung verklebt ist, dass sich das Klebeband über eine der Längskanten der Eindeckung erstreckt. Außerdem verfügen die textile Eindeckung und das Klebeband im Wesentlichen rechtwinklig zur Laufrichtung über ein oder mehrere Schwächungslinien, so dass die Ummantelung leichter handeinreißbar ist. Hier setzt die Erfindung ein.

Der Erfindung liegt das technische Problem zugrunde, ein derartiges Verfahren zur Herstellung einer Ummantelung für langgestrecktes Gut so weiter zu entwickeln, dass die Produktion vereinfacht ist und insgesamt verringerte Kosten beobachtet werden.

Zur Lösung dieser technischen Problemstellung ist ein gattungsgemäßes Verfahren zur Herstellung einer Ummantelung für langgestrecktes Gut im Rahmen der Erfindung dadurch gekennzeichnet, dass das Trägerband erst nach Herstellen des Laminats mit einer Klebebeschichtung zumindest teilweise im Freibereich ausgerüstet wird.

D.h., der Freibereich zwischen den beiden selbstklebenden Klebebändern wird ganz oder teilweise mit der nachträglich aufgebrachten Klebebeschichtung ausgerüstet. In diesem Zusammenhang kann mit einer vollflächigen Klebebeschichtung des Freibereiches gearbeitet werden. Es ist aber auch eine Streifenbeschichtung des Freibereiches möglich und wird von der Erfindung umfasst. In jedem Fall verfügt das Trägerband im Freibereich über eine mehr oder minder ausgeprägte Klebebeschichtung, die letztendlich für den Verschluss der Ummantelung beim Ummanteln des langgestreckten Gutes genutzt wird.

Die Erfindung verzichtet also zunächst einmal bewusst auf die Handhabung und Verarbeitung von drei jeweils einseitig klebend ausgerüsteten Klebebändern, wie dies im Rahmen der Lehre nach der EP 1 875 573 B1 obligatorisch ist. Vielmehr werden lediglich zwei zumindest einseitig mit einer Klebebeschichtung ausgerüstete Klebebänder miteinander zu dem Laminat vereinigt. Hierfür sorgt das erfindungsgemäß klebebeschichtungsfrei ausgebildete Trägerband. Auf diese Weise wird die jeweilige Handhabung vereinfacht und können die beiden Klebebänder unschwer mit dem Trägerband vereinigt werden, zumal die beiden Klebebänder hierzu axial voneinander beabstandet ausgerichtet werden.

Im Unterschied zu der Lehre nach der EP 1 312 097 B1 wird das Trägerband erfindungsgemäß bewusst mit einer zusätzlichen Klebebeschichtung ausgerüstet, und zwar zumindest teilweise im Freibereich zwischen den beiden einseitig klebend ausgerüsteten Klebebändern. Hinzu kommt, dass die beiden einseitig klebend ausgerüsteten Klebebänder erfindungsgemäß mit dem Trägerband nicht in einem schmalen Kantenbereich verbunden sind bzw. verbunden werden. Vielmehr entspricht die Breite des Trägerbandes meistens der Breite des breiteren der beiden Klebebänder und kann eine Breite bis hin zu in etwa der aufaddierten Breite der beiden Klebebänder besitzen. Außerdem ist der Freibereich zwischen den beiden Klebebändern meistens so bemessen, dass er in etwa die Hälfte der Breite des schmaleren Klebebandes bis zum Zweifachen dieser Breite aufweist. D.h., der axiale Abstand ist kleiner als die doppelte geringste Breite des jeweiligen Klebebandes ausgelegt.

Bei dem Trägerband handelt es sich typischerweise um ein textiles Bandmaterial. Grundsätzlich kann an dieser Stelle auch eine Kunststofffolie, eine Papierfolie, eine Papierbahn oder ein anderes flächiges Material zum Einsatz kommen. Sofern das Trägermaterial als textiles Bandmaterial ausgebildet ist, haben sich flächige Vliesmaterialien, Gewebe, Gewirke, aber auch Filz- oder Schaumstofflagen als günstig erwiesen. Diesen sämtlichen Materialien ist gemein, dass die Flächenmasse im Regelfall unterhalb von 500 g/m$^2$ und insbesondere sogar weniger als 200 g/m$^2$ beträgt.

Außerdem ist das Trägerband erfindungsgemäß klebebeschichtungsfrei ausgebildet, verfügt also nicht über eine Klebebeschichtung. Grundsätzlich sind natürlich prinzipiell Beschichtungen wie eine Lackbeschichtung denkbar. Aus Kostengründen wird man hierauf im Allgemeinen verzichten und das Trägerband nicht nur klebebeschichtungsfrei, sondern im Regelfall sogar generell beschichtungsfrei auslegen.

Durch die klebebeschichtungsfreie Ausbildung des Trägerbandes lässt sich dieses problemlos mit den beiden einseitig mit einer Klebebeschichtung ausgerüsteten Klebebändern zu dem Laminat vereinigen. Denn hierzu ist es lediglich erforderlich, dass die beiden jeweiligen Klebebänder in Längserstreckung jeweils klebebeschichtungsseitig mit dem Trägerband vereinigt werden. D.h., das Trägerband wird mit der jeweiligen Klebebeschichtung des zugehörigen Klebebandes im einfachsten Fall schlicht und ergreifend verklebt.

Dabei wird meistens so vorgegangen, dass die beiden Klebebänder an einer gemeinsamen Vorderseite des Trägerbandes angeordnet werden. Außerdem wird so vorgegangen, dass die beiden Klebebänder in ihrer Längserstreckung den von ihnen begrenzten Freibereich definieren. D.h., zwischen den beiden Klebebändern erstreckt sich der besagte Freibereich, welcher von den jeweiligen Rändern der Klebebänder in der Längserstreckung begrenzt wird. In diesem Freibereich erkennt man das Trägerband bzw. dessen Vorderseite, während die übrige Vorderseite des Trägerbandes von den beiden Klebebändern bedeckt bzw. überdeckt wird.

Erfindungsgemäß wird zumindest dieser Freibereich nun nach der Herstellung des Laminates mit einer Klebebeschichtung ausgerüstet. Das kann im einfachsten Fall so geschehen, dass die Klebebeschichtung mit Hilfe einer Maske so auf die Vorderseite des Trägerbandes aufgebracht wird, dass der Freibereich von der Klebebeschichtung ausgefüllt wird. Alternativ hierzu kann die Klebebeschichtung auch von einem Transferband respektive Transferfilm getragen werden und mit Hilfe des Transferbandes bzw. Transferfilmes dann im Freibereich an der besagten Vorderseite des Trägerbandes angebracht bzw. auf die Vorderseite aufgebracht werden. Demgegenüber bleibt die Rückseite des Trägerbandes klebebeschichtungsfrei bzw. meistens sogar gänzlich beschichtungsfrei.

Dabei wird man insgesamt so vorgehen, dass der Freibereich zumindest teilweise mit der Klebebeschichtung ausgerüstet wird. D.h., die nachträglich auf das Trägerband aufgebrachte Klebebeschichtung deckt den Freibereich ab, und zwar wenigstens teilweise. Selbstverständlich kann die Klebebeschichtung auch über diesen hinaus reichen. Das ist erfindungsgemäß dann der Fall, wenn der Freibereich nach Herstellen des Laminates mit der betreffenden Klebebeschichtung ausgerüstet wird und die Klebebeschichtung über den fraglichen Freibereich hinaus reicht.

Dabei wird im Regelfall so vorgegangen, dass die auf das Trägerband aufgebrachte Klebebeschichtung den Freibereich entweder vollständig ausfüllt oder an einem Rand oder beiden Rändern mit dem zugehörigen Klebeband überlappt. In diesem Zusammenhang wird eine Überlappung von allenfalls 10% bis maximal 20%, bezogen auf die gesamte Breite des Freibereiches, zugelassen, um nicht den Verbrauch an Klebstoff für die Klebebeschichtung des Trägerbandes unnötig hoch zu treiben. Vielmehr stellt diese Bemessungsregel sicher, dass der Freibereich in jedem Fall mit Hilfe der Klebebeschichtung für das Trägerband ausgefüllt wird, wobei zusätzlich auch ein randseitiger Überlapp in den angegebenen Grenzen bis maximal 20%, bezogen auf die Breite des Freibereiches, zugelassen wird.

Wie bereits erläutert, werden die beiden Klebebänder in Längserstreckung unter Berücksichtigung eines axialen Abstandes mit dem Trägerband zu dem Laminat vereinigt. Dabei hat es sich bewährt, wenn dieser axiale Abstand zwischen den beiden Klebebändern im Regelfall die Hälfte der geringsten Breite bis das Zweifache dieser geringsten Breite des jeweiligen Klebebandes ausfüllt. Diese Bemessungsregel trägt dem Umstand Rechnung, dass das nach dem beschriebenen Verfahren hergestellte Laminat um das langgestreckte Gut längs gewickelt wird. Dabei sorgt typischerweise die Klebebeschichtung im Freibereich für den endseitigen Verschluss der solchermaßen realisierten Längsumhüllung, weshalb die angesprochene Breite des Freibereiches und folglich der axiale Abstand in diesem Kontext ausreicht.

Die beiden Klebebänder können insgesamt eine gleiche Breite aufweisen. Es ist aber auch möglich, mit Klebebändern unterschiedlicher Breite zu arbeiten. Das hängt letztlich davon ab, welchen Durchmesser das zu ummantelnde langgestreckte Gut aufweist. Im Falle unterschiedlicher Breite der beiden Klebebänder wird meistens ein Breitenverhältnis von 1:1 bis 1:10 und vorzugsweise 1:1 bis 1:5 beobachtet. Außerdem ist die Auslegung im Regelfall so getroffen, dass die Breite des Trägerbandes in etwa der Breite des breiteren der beiden Klebebänder entspricht und bis hin zur aufaddierten Breite der beiden Klebebänder ausgelegt sein kann.

Auf diese Weise wird zunächst einmal eine stabile Auslegung des Laminates zur Verfügung gestellt. Im Übrigen stellt diese Bemessungsregel sicher, dass die beiden Klebebänder mit jeweils seitlichem Überstand mit dem Trägerband vereinigt werden. Dieser seitliche Überstand entspricht von der Breite her (jeweils) in etwa dem Freibereich oder übersteigt diesen. Mit Hilfe des seitlichen Überstandes wird sichergestellt, dass die solchermaßen realisierte Ummantelung sicher mit dem langgestreckten Gut bei der Längsumhüllung verklebt wird und auf diese Weise ein einwandfreier Schutz vor Beschädigungen durch Scheuern, Grate etc. zur Verfügung steht.

Dabei hat es sich weiter bewährt, wenn die beiden Klebebänder mit in etwa gleichem seitlichen Überstand mit dem Trägerband vereinigt werden. Denn das hat zur Folge, dass das Laminat an diesen beiden Überständen mit der jeweils nach außen weisenden Klebebeschichtung des zugehörigen Klebebandes orientiert wird. D.h., in Folge der Überstände verfügt das Laminat über die jeweils nach außen weisende Klebebeschichtung des zugehörigen Klebebandes im Bereich des Überstandes.

Meistens wird man mit unterschiedlichen Überständen arbeiten. Tatsächlich korrespondiert ein erstes mit dem Trägerband vereinigtes Klebeband meistens zu einem Fixierstreifen. D.h., die Klebebeschichtung dieses ersten Klebebandes sorgt dafür, dass die Ummantelung am langgestreckten Gut fixiert wird. Das zweite Klebeband sorgt demgegenüber für einen Verschluss der Ummantelung nach dem Längsumwickeln des langgestreckten Gutes. Der Überstand des auf diese Weise realisierten Verschlussstreifens ist meistens von seiner Breite her größer als die Breite des Fixierstreifens ausgelegt. Tatsächlich beobachtet man an dieser Stelle ein Breitenverhältnis der beiden Überstände und folglich des Fixierstreifens zum Verschlussstreifen im Bereich von 1:1 bis 1:5 und vorzugsweise im Bereich von 1:1 bis 1:3.

In jedem Fall sorgen die beiden Überstände bzw. der Fixierstreifen und der Verschlussstreifen in Kombination dafür, dass die Ummantelung am langgestreckten Gut einerseits fixiert wird und andererseits die Längsumhüllung geschlossen werden kann. Dabei wird man meistens so vorgehen, dass das Laminat mit der Klebebeschichtung an seinem einen Überstand parallel zum langgestreckten Gut ausgerichtet und hieran festgelegt wird. D.h., mit dem einen seitlichen Überstand und der dort vorgesehenen Klebebeschichtung wird das Laminat an dem zu ummantelnden langgestreckten Gut fixiert respektive vorfixiert. Anschließend wird das Laminat bzw. die solchermaßen realisierte Ummantelung um das langgestreckte Gut längs gewickelt. Dadurch entsteht ein Längswickel. Zum Abschluss wird der weitere zweite Überstand mit der dortigen Klebebeschichtung mit dem Längswickel verklebt.

Dabei kommt es meistens dazu, dass der weitere zweite Überstand bzw. dessen Klebebeschichtung und folglich der Verschlussstreifen mit der Klebebeschichtung des Trägerbandes im Freibereich in Kontakt kommt, so dass beide Klebebeschichtungen miteinander verklebt werden und so für einen besonders sicheren Halt des weiteren zweiten Überstandes und damit der Endkante des Längswickels bzw. der Ummantelung sorgen. Dabei versteht es sich, dass die breitenmäßige Auslegung und Anbringung an die Abmessungen und insbesondere den Durchmesser des langgestreckten Gutes angepasst sind.

Im Ergebnis wird ein Verfahren zur Herstellung einer Ummantelung für langgestrecktes Gut beschrieben, welches für einen besonderen mechanischen Schutz des langgestreckten Gutes sorgt. Hierbei handelt es sich meistens um einen oder mehrere Kabelstränge. Eine in diesem Zusammenhang realisierte Ummantelung bzw. Umhüllung wird im Regelfall in Verbindung mit Kabelsträngen in Automobilen eingesetzt. Dabei sorgt die Ummantelung insgesamt für einen Schutz der einzelnen Kabelstränge bzw. Kabelsätze gegen mechanische Schäden. Diese können beispielsweise durch Scheuern und Reiben in einem Kraftfahrzeug auftreten und werden erfindungsgemäß beherrscht.

Die erfindungsgemäße Vorgehensweise sowie die zugehörige Umhüllung lassen sich besonders einfach und kostengünstig herstellen. Das ist vor dem Hintergrund des enormen Preiswettbewerbes auf dem Automobilsektor von besonderer Bedeutung. Hierin sind die wesentlichen Vorteile zu sehen.

Im Folgenden wird die Erfindung anhand einer lediglich ein Ausführungsbeispiel darstellenden Zeichnung näher erläutert; es zeigen:

Fig. 1A bis 1C    ein Verfahren zur Herstellung einer Ummantelung für langgestrecktes Gut in verschiedenen Verfahrensstufen und

Fig. 2    die am langgestreckten Gut angebrachte Ummantelung.

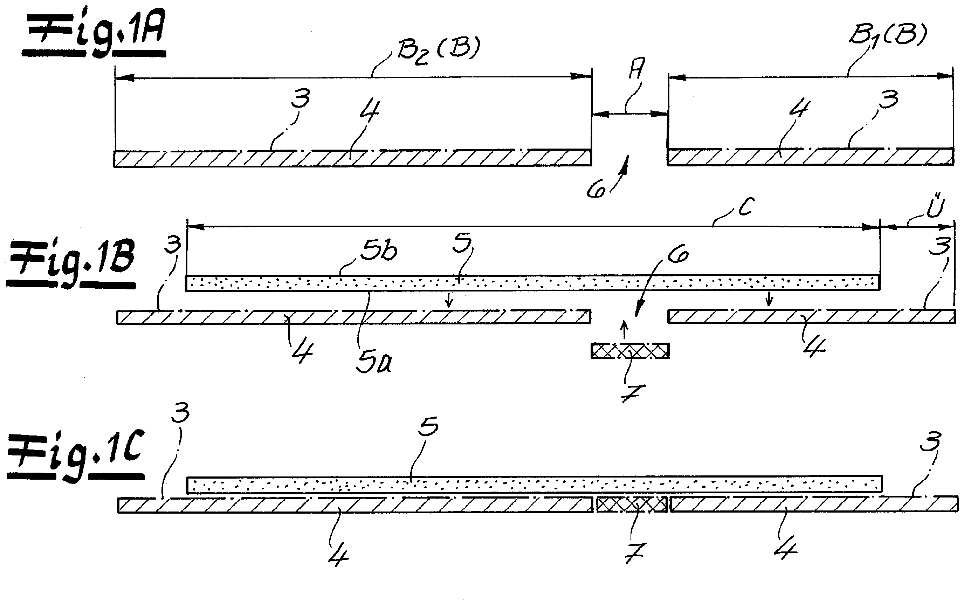

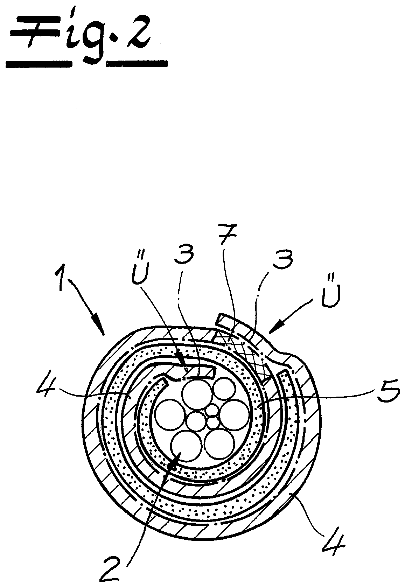

In den Figuren ist eine Ummantelung 1 für langgestrecktes Gut 2 dargestellt. Bei dem langgestreckten Gut 2 handelt es sich im Ausführungsbeispiel und nicht einschränkend um mehrere zusammengefasste Kabelstränge, Kabelsätze etc. in einem Kraftfahrzeug. Mit Hilfe der Ummantelung 1 wird nun das langgestreckte Gut 2 bzw. werden die Kabelstränge in ihrer Längserstreckung umhüllt. Die Ummantelung 1 korrespondiert folglich zu einem Längswickel als Umhüllung, wie dies die Fig. 2 zeigt und dessen Herstellung im Detail in den Fig. 1A bis 1C dargestellt ist. Hier ist die Ummantelung 1 und sind die verschiedenen Herstellungsschritte in ausgestrecktem Zustand ersichtlich.

Bei der Herstellung der Ummantelung 1 werden zunächst zwei jeweils zumindest einseitig mit einer Klebebeschichtung 3 ausgerüstete Klebebänder 3, 4 bereitgestellt. Die beiden Klebebänder 3, 4 verfügen neben der Klebebeschichtung 3 über einen Träger 4. Bei dem Träger 4 kann es sich um einen solchen aus einem Gewebe oder Gewirke handeln. Im Regelfall kommt ein PET(Polyethylenterephthalat)-Gewebe oder auch ein Polyamid-Gewebe zum Einsatz. Generell kann der Träger 4 aber auch als Velourträger oder Gewirke sowie Gelege ausgebildet sein. Im Allgemeinen handelt es sich bei dem Träger 4 um einen textilen Träger 4, der grundsätzlich auch als Vlies ausgebildet sein mag.

Das Klebeband 3, 4 verfügt über eine Breite B im Bereich von ca. 15 mm bis 250 mm. Vorzugsweise liegt die Breite B im Bereich zwischen 15 mm und 100 mm. Das Flächengewicht des jeweiligen Klebebandes 3, 4 ist im Bereich von 40 g/m$^2$ bis 800 g/m$^2$ und vorzugsweise zwischen 100 g/m$^2$ und 250 g/m$^2$ angesiedelt. Seine Dicke mag im Bereich zwischen 0,1 mm bis 5 mm und vorzugsweise im Bereich zwischen 0,2 mm bis 1 mm angesiedelt sein.

Bei der Klebebeschichtung 3 handelt es sich um eine Klebemasse auf Basis von Natur- oder Synthesekautschuk. Meistens wird ein Acrylatkleber und insbesondere Hotmeltkleber eingesetzt. Grundsätzlich können auch Klebemassen auf Silikon, Polyurethan- oder Polyeterbasis zum Einsatz kommen. Daneben sind auch Klebemassen denkbar, die sich aus 20 Gew.-% bis 85 Gew.-% eines Polyurethans oder Polyethers sowie 15 Gew.-% bis 85 Gew.-% eines mit der vorgenannten Komponente verträglichen Klebeharzes sowie 0,01 Gew.-% bis 3 Gew.-% eines Vernetzungsmittels zusammensetzen. Als Auftragsgewichte für die Klebebeschichtung 3 empfiehlt die Erfindung Werte im Bereich zwischen ca. 30 g/m$^2$ bis zu 300 g/m$^2$.

Die beiden einseitig mit der Klebebeschichtung 3 ausgerüsteten Klebebänder 3, 4 werden jeweils axial voneinander beabstandet mit Hilfe eines Trägerbandes 5 zu einem Laminat 3, 4, 5 vereinigt. Zu diesem Zweck werden die beiden Klebebänder 3, 4 in Längserstreckung unter Definition eines von ihnen begrenzten Freibereiches 6 jeweils klebebeschichtungsseitig mit dem Trägerband 5 vereinigt. Das erkennt man beim Übergang von der Fig. 1A zu der Fig. 1B.

Bei diesem Vorgang wird das Trägerband 5 jeweils mit der Klebebeschichtung 3 des zugehörigen Klebebandes 3, 4 verklebt. In diesem Zusammenhang geht die Erfindung insgesamt so vor, dass die beiden Klebebänder 3, 4 an einer gemeinsamen Vorderseite 5a des Trägerbandes 5 angeordnet werden. Von besonderer erfinderischer Bedeutung ist in diesem Zusammenhang, dass das Trägerband 5 an seiner Vorderseite 5a und seiner Rückseite 5b jeweils beschichtungsfrei ausgebildet ist und insbesondere sowie insgesamt klebeschichtungsfrei ausgelegt ist. D.h., das Trägerband 5 wird unmittelbar auf die Klebebeschichtung 3 der betreffenden Klebebänder 3, 4 aufgedrückt und haftet auf der Klebebeschichtung 3.

Erst nach der Herstellung des solchermaßen erzeugten Laminates 3, 4, 5 wird das Trägerband 5 mit einer eigenen Klebebeschichtung 7 zumindest in dem Freibereich 6 ausgerüstet, und zwar wenigstens teilweise. Das erkennt man beim Übergang von der Fig. 1B zur Fig. 1C. Tatsächlich geht die Erfindung im Ausführungsbeispiel so vor, dass zunächst das klebebeschichtungsfrei ausgelegte Trägerband 5 mit seiner Vorderseite 5a mit der zugehörigen Klebebeschichtung 3 der jeweiligen Klebebänder 3, 4 verbunden wird. Dazu werden die beiden Klebebänder 3, 4 axial voneinander beabstandet in Längserstreckung ausgerichtet. Gleiches gilt für das Trägerband 5. Danach werden die Klebebänder 3, 4 mit dem Trägerband verbunden.

Nachdem auf diese Weise der Freibereich 6 zwischen den jeweils innenseitig liegenden Rändern der beiden Klebebänder 3, 4 definiert worden ist, wird dieser Freibereich 6 mit der Klebebeschichtung 7 ausgerüstet. Dazu kann der Kleber durch Aufsprühen unter Berücksichtigung einer Maske in den fraglichen Freibereich 6 auf das Trägerband 5 bzw. dessen Vorderseite 5a aufgebracht werden. Im Ausführungsbeispiel ist die Klebebeschichtung 7 deutlich dicker als die jeweilige Klebebeschichtung 3 dargestellt. Das dient jedoch nur dazu, um den Herstellungsprozess und die Anordnung der Klebebeschichtung 7 deutlich zu machen. Tatsächlich werden die Klebebeschichtungen 3, 7 im Regelfall mit vergleichbarem Flächenauftragsgewicht (Flächenmasse) auf den zugehörigen Träger 4 bzw. 5 aufgebracht. Dieses ist meistens im Bereich von 30 g/m$^2$ bis 300 g/m$^2$ angesiedelt, wie dies einleitend mit Bezug zur Klebebeschichtung 3 bereits erläutert wurde.

Alternativ hierzu ist es auch möglich, dass die Klebebeschichtung 7 auf einem nicht dargestellten Transferfilm vorhanden ist und mit Hilfe des Transferfilmes im Freibereich 6 auf dem Trägerband 5 bzw. dessen Vorderseite 5a angebracht wird. Darüber hinaus besteht die weitere Möglichkeit, die Klebebeschichtung 7 berührungslos im Freibereich 6 auf das Trägerband 5 aufzulegen. An dieser Stelle stehen verschiedene Methoden und Vorgehensweisen zur Verfügung, beispielsweise das sogenannte "Kiss Coating" oder das "Curtain Coating" sowie das bereits zuvor erwähnte Sprühcoating-Verfahren.

In topologischer Hinsicht ist die Auslegung insgesamt so getroffen, dass die beiden Klebebänder 3, 4 in ihrer Längserstreckung einen axialen Abstand A voneinander aufweisen, welcher in etwa die Hälfte der geringsten des jeweiligen Klebebandes 3, 4 bis hin zum Zweifachen dieser geringsten Breite $B_1$, $B_2$ beträgt. Im Ausführungsbeispiel verfügt das rechte Klebeband 3, 4 in den Fig. 1A bis 1C über die geringste Breite $B_1$, die vorliegend größer als der axiale Abstand A der beiden Klebebänder 3, 4 ausgebildet ist. Dabei mag der Abstand A Werte im Bereich zwischen ca. 20 mm und 50 mm aufweisen. Dementsprechend verfügt auch der solchermaßen definierte Freibereich 6 über eine entsprechende Breite A.

Man erkennt, dass die beiden Klebebänder 3, 4 eine unterschiedliche Breite $B_1$, $B_2$ aufweisen. Selbstverständlich können beide Klebebänder 3, 4 auch mit einer gleich ausgelegten Breite $B_1$, $B_2$ ausgebildet sein. Außerdem ist im Ausführungsbeispiel das Breitenverhältnis $B_1$:$B_2$ im Bereich zwischen ca. 1:1 bis 1:3 angesiedelt. Tatsächlich mag dieses Breitenverhältnis $B_1$:$B_2$ Werte bis maximal 1:10 annehmen.

Die dargestellte Breite C des Trägerbandes 5 entspricht in etwa der Breite $B_2$ des breiteren der beiden Klebebänder 3, 4. Im Maximum kann die Breite C des Trägerbandes 5 der aufaddierten Breite $B_1$, $B_2$ der beiden Klebebänder 3, 4 entsprechen. D.h., es gilt:

$$C \approx B_2 \text{ bis } B_1 + B_2.$$

Außerdem erkennt man anhand der Darstellungen, dass die beiden Klebebänder 3, 4 mit jeweils einem Überstand Ü mit dem Trägerband 5 vereinigt werden. Dieser jeweils seitliche Überstand Ü ist von seiner Breite her im Ausführungsbeispiel sowohl am rechten als auch am linken Rand des Trägerbandes 5 in etwa gleich ausgelegt. Dabei sorgt die Orientierung und Ausbildung des Laminates 3, 4, 5 insgesamt dafür, dass das betreffende Laminat 3, 4, 5 an seinen beiden Überständen Ü mit der jeweils nach außen weisenden Klebebeschichtung 3 des zugehörigen Klebebandes 3, 4 orientiert wird. Mit Hilfe des Überstandes Ü bzw. der dort freiliegenden Klebebeschichtung 3 des zugehörigen Klebebandes 3, 4 wird die auf diese Weise realisierte Umhüllung bzw. Ummantelung 1 um das zu ummantelnde langgestreckte Gut 2 gewickelt, wie dies in der Fig. 2 im Detail dargestellt ist.

Zu diesem Zweck wird das Laminat 3, 4, 5 zunächst mit der Klebebeschichtung 3 am zugehörigen Überstand Ü des im Ausführungsbeispiel rechten Klebebandes 3, 4 an dem langgestreckten Gut 2 festgelegt. Anschließend wird die Umhüllung gemäß der Darstellung in der Fig. 1C um das langgestreckte Gut 2 längs gewickelt. Zum Abschluss wird der weitere Überstand Ü, welcher im Beispiel zum linken Klebeband 3, 4 gehört, mit dem auf diese Weise hergestellten Längswickel verklebt. Dabei beobachtet man eine besonders intensive Verklebung, weil die Klebebeschichtung 3 des in diesem Fall linken Überstandes Ü entsprechend der Darstellung der Fig. 1C auf die Klebebeschichtung 7 des Trägerbandes 5 trifft und beide Klebebeschichtungen 3, 7 miteinander verklebt werden (vgl. Fig. 2).

Im Ausführungsbeispiel korrespondiert der Überstand Ü des ersten Klebebandes 3, 4 mit der geringsten Breite $B_1$ zum sogenannten Fixierstreifen, mit dessen Hilfe das erste Klebeband 3, 4 bzw. der dortige Überstand Ü an dem langgestreckten Gut 2 ausweislich der Fig. 2 festgelegt wird. Der Überstand Ü des zweiten Klebebandes 3, 4 der Breite $B_2$ ist meistens von seiner Breite her größer als der Überstand Ü des ersten Klebebandes 3, 4 ausgelegt. Der Überstand Ü des zweiten Klebebandes 3, 4 korrespondiert zu einem Verschlussstreifen. Als Folge hiervon verfügen die zugehörigen Überstände Ü bzw. die Breite des Fixierstreifens im Vergleich zu derjenigen des Verschlussstreifens über ein Breitenverhältnis, welches im Bereich von 1:1 bis 1:5 und vorzugsweise im Bereich von 1:1 bis 1:3 angesiedelt ist.

Es ist offensichtlich, dass sich je nach Variation der Breiten $B_1$, $B_2$ und C unterschiedliche Gesamtbreiten des Laminates 3, 4, 5 und auch verschiedene Größen des Freibereiches 6 bzw. seiner Breite A darstellen und umsetzen lassen. Nicht nur die jeweiligen Breiten $B_1$, $B_2$ und C der beiden Klebebänder 3, 4 sowie des Trägerbandes 5 spielen hierbei eine Rolle, sondern auch der jeweils eingestellte Überstand Ü. Dabei lassen sich Gesamtbreiten des Laminates 3, 4, 5 im Bereich von ca. 80 mm bis 600 mm realisieren, so dass langgestreckte Güter 2 ganz unterschiedlichen Durchmesser ummantelt werden können. Diese Abschätzungen sind selbstverständlich nur beispielhaft zu verstehen und selbstverständlich nicht einschränkend.

**Patentansprüche**

1. Verfahren zur Herstellung einer Ummantelung für langgestrecktes Gut (2), insbesondere einer Umhüllung für Kabelsätze, wonach zwei jeweils zumindest einseitig mit einer Klebebeschichtung (3) ausgerüstete Klebebänder (3, 4) axial voneinander beabstandet mithilfe eines Trägerbandes (5) zu einem Laminat (3, 4, 5) vereinigt werden und dazu die beiden Klebebänder (3, 4) in Längserstreckung unter Definition eines von ihnen begrenzten Freibereiches (6) jeweils klebebeschichtungsseitig mit dem Trägerband (5) vereinigt werden, und wonach das Trägerband (5) klebebeschichtungsfrei ausgebildet ist, **dadurch gekennzeichnet,** dass das Trägerband (5) erst nach Herstellen des Laminates (3, 4, 5) mit einer Klebebeschichtung (7) zumindest teilweise im Freibereich (6) ausgerüstet wird.

2. Verfahren nach Anspruch 1, **dadurch gekennzeichnet, dass** die beiden Klebebänder (3, 4) in Längserstreckung einen axialen Abstand (A) voneinander aufweisen, welcher kleiner als die doppelte geringste Breite (B₁, B₂) des jeweiligen Klebebandes (3, 4) ausgelegt ist.

3. Verfahren nach Anspruch 1 oder 2, **dadurch gekennzeichnet, dass** die beiden Klebebänder (3, 4) an einer gemeinsamen Vorderseite (5a) des Trägerbandes (5) angeordnet werden.

4. Verfahren nach einem der Ansprüche 1 bis 3, **dadurch gekennzeichnet, dass** die beiden Klebebänder (3, 4) eine gleiche bis unterschiedliche Breite (B₁, B₂) aufweisen.

5. Verfahren nach einem der Ansprüche 1 bis 4, **dadurch gekennzeichnet, dass** die beiden Klebebänder (3, 4) in einem Breitenverhältnis (B₁:B₂) von 1:1 bis 1:10 vorliegen.

6. Verfahren nach einem der Ansprüche 1 bis 5, **dadurch gekennzeichnet, dass** die Breite (C) des Trägerbandes (5) der Breite (B₂) des breiteren der beiden Klebebänder (3, 4) bis hin zur aufaddierten Breite (B₁, B₂) der beiden Klebebänder (3, 4) entspricht.

7. Verfahren nach einem der Ansprüche 1 bis 6, **dadurch gekennzeichnet, dass** die beiden Klebebänder (3, 4) ein Breitenverhältnis ihrer seitlichen Überstände (Ü) im Bereich von 1:1 bis 1:5 und vorzugsweise im Bereich von 1:1 bis 1:3 aufweisen.

8. Verfahren nach einem der Ansprüche 1 bis 7, **dadurch gekennzeichnet, dass** das Laminat (3, 4, 5) an seinen beiden Überständen (Ü) mit der jeweils nach außen weisenden Klebebeschichtung (3) des zugehörigen Klebebandes (3, 4) orientiert wird.

9. Verfahren nach einem der Ansprüche 1 bis 8, **dadurch gekennzeichnet, dass** das Laminat (3, 4, 5) mit der Klebebeschichtung (3) an seinem einen Überstand (Ü) parallel zum langgestreckten Gut (2) ausgerichtet und hieran festgelegt wird und anschließend um das Gut (2) längs gewickelt sowie abschließend mit der Klebebeschichtung (3) des weiteren zweiten Überstandes (Ü) mit dem Längswickel verklebt wird.

**Claims**

1. A method for producing a cladding for elongated material (2), in particular a sheath for cable sets, according to which two adhesive tapes (3, 4), which are each equipped at least on one side with an adhesive coating (3), are joined to form a laminate (3, 4, 5) axially spaced apart from one another by means of a carrier tape (5) and that, for this purpose, the two adhesive tapes (3, 4) are each joined on the adhesive coating side with the carrier tape (5) in the longitudinal extension by defining a free region (6), which they define, and according to which the carrier tape (5) is embodied so as to be free of adhesive coating, **characterized in that** the carrier tape (5) is equipped with an adhesive coating (7) at least partially in the free region (6) only after production of the laminate (3, 4, 5).

2. The method according to claim 1, **characterized in that**, in the longitudinal extension, the two adhesive tapes (3, 4) have an axial distance (A) from one another, which is designed smaller than twice the smallest width (B₁, B₂) of the respective adhesive tape (3, 4).

3. The method according to claim 1 or 2, **characterized in that** the two adhesive tapes (3, 4) are arranged on a common front side (5a) of the carrier tape (5).

4. The method according to one of claims 1 to 3, **characterized in that** the two adhesive tapes (3, 4) have an identical to different width (B₁, B₂).

5. The method according to one of claims 1 to 4, **characterized in that** the two adhesive tapes (3, 4) are present in a width ratio (B₁, B₂) of 1:1 to 1:10.

6. The method according to one of claims 1 to 5, **characterized in that** the width (C) of the carrier tape (5) corresponds to the width (B₂) of the wider one of the two adhesive tapes (3, 4), all the way to the added width (B₁, B₂) of the two adhesive tapes (3, 4) .

7. The method according to one of claims 1 to 6, **characterized in that** the two adhesive tapes (3, 4) have a width ratio of their lateral overhangs (U) in the range of 1:1 to 1:5 and preferably in the range of 1:1 to 1:3.

8. The method according to one of claims 1 to 7, **characterized in that** the laminate (3, 4, 5) is oriented on its two overhangs (U) with the respective adhesive coating (3), which faces to the outside, of the corresponding adhesive tape (3, 4).

9. The method according to one of claims 1 to 8, **characterized in that** the laminate (3, 4, 5) is aligned with the adhesive coating (3) on its one overhang (U) parallel to the elongated material (2) and is fixed thereto and is subsequently wound longitudinally around the material (2) and is finally adhered to the longitudinal winding with the adhesive coating (3) of the additional second overhang (Ü).

**Revendications**

1. Procédé, destiné à fabriquer une gaine pour des produits allongés (2), notamment une enveloppe pour des jeux de câbles, selon lequel on réunit deux rubans adhésifs (3, 4), munis au moins sur une face d'un revêtement adhésif (3) avec un écart axial mutuel à l'aide d'une bande de support (5) en un laminé (3, 4, 5) et à cet effet, on réunit les deux rubans adhésifs (3, 4) dans leur direction longitudinale en définissant une zone libre (6) qu'ils délimitent, chaque fois sur la face du revêtement adhésif avec la bande de support (5) et selon lequel la bande de support (5) est conçue en étant exempte de revêtement adhésif, **caractérisé en ce qu'**on ne munit la bande de support (5) au moins en partie dans la zone libre (6) d'un revêtement adhésif (7) qu'après la création du laminé (3, 4, 5).

2. Procédé selon la revendication 1, **caractérisé en ce que** dans l'extension longitudinale, les deux rubans adhésifs (3, 4) présentent un écart axial (A) mutuel, lequel est inférieur au double de la plus faible largeur (B1, B2) du ruban adhésif (3, 4) en question.

3. Procédé selon la revendication 1 ou 2, **caractérisé en ce qu'**on place les deux rubans adhésifs (3, 4) sur une face antérieure (5a) commune de la bande de support (5) .

4. Procédé selon l'une quelconque des revendications 1 à 3, **caractérisé en ce que** les deux rubans adhésifs (3, 4) présentent une largeur identique à différente (B1, B2).

5. Procédé selon l'une quelconque des revendications 1 à 4, **caractérisé en ce que** les deux rubans adhésifs (3, 4) se présentent avec un rapport en largeur (B1 : B2) de 1 :1 à 1 :10.

6. Procédé selon l'une quelconque des revendications 1 à 5, **caractérisé en ce que** la largeur (C) de la bande de support (5) correspond à la largeur (B2) du plus large des rubans adhésifs (3, 4) jusqu'à la largeur (B1, B2) additionnée des deux rubans adhésifs (3, 4).

7. Procédé selon l'une quelconque des revendications 1 à 6, **caractérisé en ce que** les deux rubans adhésifs (3, 4) présentent un rapport en largeur de leurs saillies (U) de l'ordre de 1 :1 à 1 :5 et de préférence, de l'ordre de 1 :1 à 1 :3.

8. Procédé selon l'une quelconque des revendications 1 à 7, **caractérisé en ce que** sur ses deux saillies (Ü), le laminé (3, 4, 5) est orienté avec le revêtement adhésif (3) respectivement dirigé vers l'extérieur du ruban adhésif (3, 4) associé.

9. Procédé selon l'une quelconque des revendications 1 à 8, **caractérisé en ce qu'**on oriente le laminé (3, 4, 5) pourvu du revêtement adhésif (3) sur l'une de ses saillies (U) à la parallèle du produit allongé (2) et on l'immobilise sur ce dernier et par la suite, on l'enroule en longueur autour du produit (2) et pour finir, on le colle avec le revêtement adhésif (3) de la deuxième saillie (Ü) supplémentaire avec l'enroulement longitudinal.

**Fig.1A**

$B_2(B)$

$B_1(B)$

3 4 A 4 3

6

**Fig.1B**

3 C Ü

5b 5 6 3

4 5a 4

7

**Fig.1C**

3 5 3

4 7 4

EP 3 180 405 B1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011079114 A1
- US 4327246 A
- EP 1875573 B1
- EP 1312097 B1
- EP 1300452 A2